# EUROPEAN PATENT APPLICATION

(11) **EP 4 621 962 A1**
(43) Date of publication of application: **24.09.2025**
(21) Application number: 24854458.7
(22) Date of filing: 14.08.2024
(51) Int. Cl.: H01M 50/258, H01M 50/211

(54) **BATTERY PACK**

(30) Priority: 16.08.2023 KR 20230106725
(71) Applicant: LG Energy Solution, Ltd., Seoul 07335 (KR)
(72) Inventor: JANG, Sung Hwan, Daejeon 34122 (KR); KIM, Gwan Woo, Daejeon 34122 (KR); JEONG, Jee Hoon, Daejeon 34122 (KR); KIM, Da Young, Daejeon 34122 (KR); KIM, Jae Wook, Daejeon 34122 (KR)
(74) Representative: BCKIP Part mbB
(86) International application number: PCT/KR2024/012097
(87) International publication number: WO 2025/037907

(57) **Abstract**

The present technology provides a battery pack. The battery pack includes a first battery cell assembly including a first cell block with a plurality of first battery cells and a first case accommodating the first cell block, and a pack housing configured to mount the first battery cell assembly therein. The first case includes a first side wall and a second side wall spaced apart from each other in a first direction with the first cell block interposed therebetween. The first side wall includes a first flange fastened to the pack housing by a first fastening member, and the first flange includes a first hole to which the first fastening member is passed. A length of the first hole in the first direction may be greater than a length of the first hole in a second direction perpendicular to the first direction.

## Description

### [Technical Field]

The present invention relates to a battery pack.

This application claims the benefit of priority based on Korean Patent Application No. 10-2023-0106725, filed on August 16, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles. Cell manufacturers are paying huge capital expenditures to meet the growth of steep demand for secondary batteries for mobility. Each company is making various attempts to increase the productivity of a secondary battery manufacturing process.

### [Disclosure]

### [Technical Problem]

The present invention is directed to providing a battery pack.

### [Technical Solution]

An aspect of the present invention provides a battery pack including: a first battery cell assembly including a first cell block with a plurality of first battery cells and a first case accommodating the first cell block, in which the first case includes a first side wall and a second side wall spaced apart from each other in a first direction with the first cell block interposed therebetween; and a pack housing configured to mount the first battery cell assembly therein, in which the first side wall includes a first flange fastened to the pack housing by a first fastening member to limit movement of the first flange relative to the pack housing in the first direction, the second side wall includes a second flange fastened to the pack housing by a second fastening member to limit movement of the second flange relative to the pack housing in the first direction, the first flange includes a first hole through which the first fastening member is passed, and a length of the first hole in the first direction is greater than a length of the first hole in a second direction perpendicular to the first direction.

In example embodiments, the second flange may include a second hole through which the second fastening member is passed, and a length of the second hole in the first direction may be equal to a length of the second hole in the second direction.

**In** example embodiments, the length of the first hole in the first direction may be greater than the length of the second hole in the first direction.

**In** example embodiments, the pack housing may include a first support rail configured to support the first flange and including a first fastening hole to which the first fastening member is fastened, and a second support rail configured to support the second flange and including a second fastening hole to which the second fastening member is fastened.

**In** example embodiments, a center of the first fastening hole may be spaced apart from a center of the first hole in the first direction.

**In** example embodiments, the battery pack may further include a second battery cell assembly including a second cell block with a plurality of second battery cells and a second case accommodating the second cell block, in which the second case includes a third side wall and a fourth side wall spaced apart from each other in the first direction with the second cell block interposed therebetween, the third side wall may include a third flange fastened to the pack housing by a third fastening member to limit movement of the third flange relative to the pack housing in the first direction, the fourth side wall may include a fourth flange fastened to the pack housing by a fourth fastening member to limit movement of the fourth flange relative to the pack housing in the first direction, the third side wall may face the second side wall, the third flange may include a third hole through which the third fastening member is passed, the fourth flange may include a fourth hole through which the fourth fastening member is passed, and a length of the fourth hole in the first direction may be greater than a length of the fourth hole in the second direction.

**In** example embodiments, a length of the third hole in the first direction may be equal to a length of the third hole in the second direction.

**In** example embodiments, the pack housing may include a first support rail configured to support the first flange, a second support rail configured to support the second flange and the third flange, and a third support rail configured to support the fourth flange, and the first support rail, the second support rail, and the third support rail may be spaced apart from one another in the first direction.

**In** example embodiments, the second flange and the third flange may be spaced apart from each other in the second direction.

**In** example embodiments, the first support rail may include a first fastening hole to which the first fastening member is fastened, the second support rail may include a second fastening hole to which the second fastening member is fastened, and a third fastening hole to which the third fastening member is fastened, the third support rail may include a fourth fastening hole to which the fourth fastening member is fastened, and the second fastening hole and the third fastening hole may be spaced apart from each other in the second direction.

**In** example embodiments, the plurality of first battery cells may be stacked in the first direction.

### [Advantageous Effects]

According to example embodiments of the present invention, a first flange for fastening one side of a battery cell assembly to a pack housing may include a slot hole, and a second flange for fastening another side of the battery cell assembly to the pack housing may include a datum hole. Because the slot hole has a long axis extending in a swelling direction of a cell block, the fastening of the first flange and the pack housing can be easily released during a rework operation on the battery cell assembly. When the fastening of the first flange with the slot hole and the pack housing is released, a change in a thickness of the cell block and movement of the first flange are allowed, and a force to be applied to parts of the second flange and pack housing that are fastened to each other decreases, making it easier to release the fastening of the second flange and pack housing. Because the battery cell assembly can be easily separated from the pack housing, the productivity of the rework operation on a battery pack improves.

**In** addition, according to example embodiments of the present invention, a single support rail configured to support all adjacent battery cell assemblies is configured to support only the same type of flanges, thus preventing or suppressing physical interference between the adjacent battery cell assemblies when fastening to one battery cell assembly is released to perform the rework work.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery pack according to example embodiments of the present invention.
FIG. 2 is a cross-sectional view of the battery pack taken along line II-II' of FIG. 1.
FIG. 3 is a plan view of a part of a first side wall of a first battery cell assembly of a battery pack.
FIG. 4 is a plan view of a part of a second side wall of the first battery cell assembly of the battery pack.
FIGS. 5A and 5B are cross-sectional views illustrating a rework operation performed on a battery pack according to example embodiments of the present invention.
FIG. 6 is a plan view of a battery pack according to example embodiments of the present invention.
FIG. 7 is a cross-sectional view taken along line VII-VII' of FIG. 6.
FIG. 8 is a cross-sectional view taken along line VIII-VIII' of FIG. 6.
FIG. 9 is a schematic view of an electric vehicle in which a battery pack according to example embodiments of the present invention is installed.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

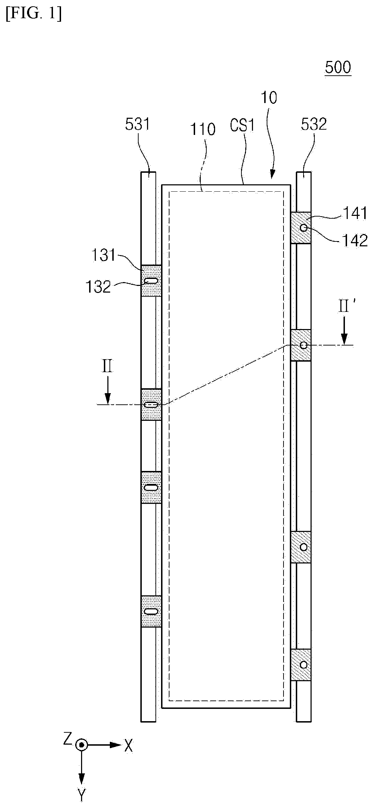

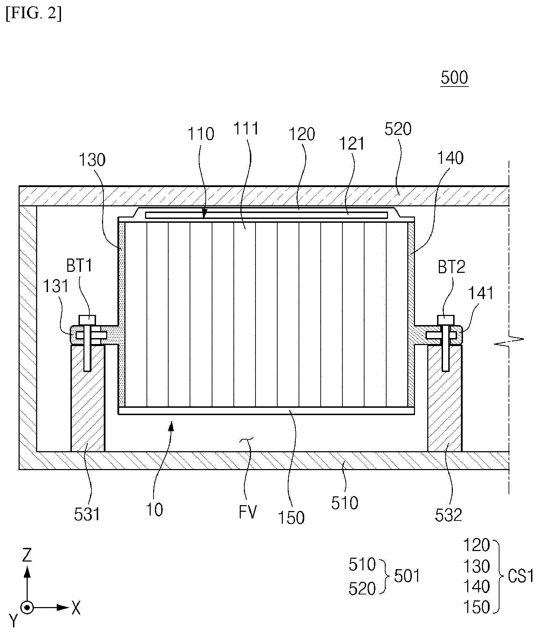

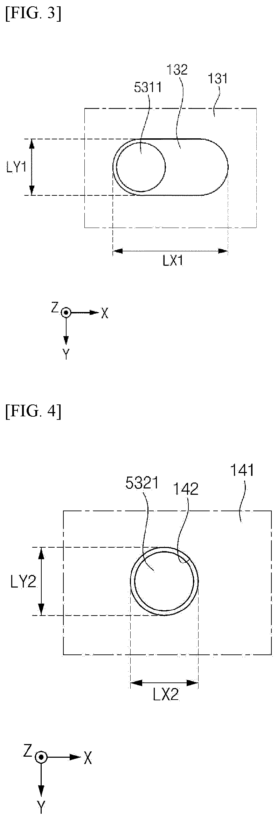

FIGS. 1 to 4 are diagrams illustrating a battery pack 500 according to example embodiments of the present invention. FIG. 1 is a plan view of the battery pack 500. FIG. 2 is a cross-sectional view of the battery pack 500 taken along line II-II' of FIG. 1. FIG. 3 is a plan view of a part of a first side wall 130 of a first battery cell assembly 10 of the battery pack 500. FIG. 4 is a plan view of a part of a second side wall 140 of the first battery cell assembly 10 of the battery pack 500.

Referring to FIGS. 1 to 4, the battery pack 500 may include a pack housing 501 and the first battery cell assembly 10 on the pack housing 501. Although FIG. 2 illustrates that the battery pack 500 includes one battery cell assembly (i.e., the first battery cell assembly 10), the present invention is not limited thereto and the battery pack 500 may include a plurality of battery cell assemblies in the pack housing 501 to be spaced apart from each other in a first direction (an X-axis direction).

The pack housing 501 may include a lower housing 510 with an accommodation space in which the first battery cell assembly 10 is accommodated, and a pack lid 520 coupled to the lower housing 510 to cover the lower housing 510 in which the first battery cell assembly 10 is accommodated. The accommodation space of the lower housing 510 may be defined by a bottom wall facing a lower surface of a first cell block 110 of the first battery cell assembly 100 and side walls on edges of the bottom wall. The pack housing 501 may further include a plurality of support rails (e.g., a first support rail 531 and a second support rail 532) provided on the bottom wall of the lower housing 510 and configured to support the first battery cell assembly 10. The plurality of support rails may be spaced apart from each other in the first direction (the X-axis direction), and extend in a second direction (a Y-axis direction).

The first battery cell assembly 10 may include the first cell block 110 and a first case CS1 for accommodation of the first cell block 110.

The first cell block 110 may include a plurality of battery cells 111. Each of the battery cells 111 is a basic unit of a lithium ion battery, i.e., a secondary battery. Each of the battery cells 111 may include an electrode assembly, an electrolyte, and a case. The electrode assembly included in the case may include a positive electrode, a negative electrode, and a separator interposed between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the battery cells 111 may be pouch type battery cells and be stacked together in one first battery cell assembly 10 in the first direction (the X-axis direction). In example embodiments, in each first battery cell assembly 10, the plurality of battery cells 111 may be pouch type battery cells whose length in the first direction (the X-axis direction) is less than a length thereof in a second direction (a Y-axis direction) and be stacked in the first direction (the X-axis direction).

When viewed in a plan view, the first cell block 110 may have a rectangular shape whose length in the first direction (the X-axis direction) is less than a length thereof in the second direction (the Y-axis direction). The first cell block 110 may have two side surfaces that face each other in the first direction (the X-axis direction), a front surface and a rear surface that face each other in the second direction (the Y-axis direction), and an upper surface and a lower surface that face each other in a third direction (a Z-axis direction).

A bus bar frame on which bus bars are mounted may be on each of the front and rear surfaces of the first cell block 110. A plurality of bus bars may be mounted on the bus bar frame on the front surface of the first cell block 110, and a plurality of bus bars may be mounted on the bus bar frame on the rear surface of the first cell block 110. The first battery cell assembly 10 may include an end plate to cover a bus bar frame connected to the front or rear surface of the first cell block 110.

A bus bar may be coupled to an electrode lead of the battery cell 111. For example, the bus bar may be coupled to the electrode lead of the battery cell 111 by welding. For example, each bus bar may be an inter-bus bar connected to electrode leads connected to different battery cells 111 belonging to the first cell block 110 to electrically connect the different battery cells 111. For example, each bus bar may be a terminal-bus bar for electrically connecting the first battery cell assembly 10 to an external electrical device.

In example embodiments, the first battery cell assembly 10 may include a first cell block 110. In example embodiments, the first battery cell assembly 10 may include a plurality of first cell blocks 110 spaced apart from each other in the second direction (the Y-axis direction) and electrically connected to each other.

The first case CS1 may include an upper cover plate 120 facing the upper surface of the first cell block 110, a first side wall 130 facing one side surface of the first cell block 110, a second side wall 140 facing another surface of the first cell block 110, and a lower cover plate 150 facing the lower surface of the first cell block 110.

The first side wall 130 and the second side wall 140 may be spaced apart from each other in the first direction (the X-axis direction) with the first cell block 110 interposed therebetween. The first battery cell assembly 10 may be mounted on the pack housing 501 by fastening the first side wall 130 and the second side wall 140 on opposite sides of the first cell block 110 to the pack housing 501 by a side mounting method. The pack housing 501 may include the first support rail 531 and the second support rail 532 spaced apart from each other in the first direction (the X-axis direction) with the first cell block 110 interposed therebetween. The first side wall 130 may be fastened to the first support rail 531 by a first fastening member BT1 such as a bolt, and the second side wall 140 may be fastened to the second support rail 532 by a second fastening member BT2 such as a bolt. The first fastening member BT1 may allow the first side wall 130 to be fastened to the first support rail 531 of the pack housing 501 so that movement of the first side wall 130 relative to the first support rail 531 of the pack housing 501 in the first direction (X-axis direction) may be limited. The second fastening member BT2 may allow the second side wall 140 to be fastened to the second support rail 532 of the pack housing 501 so that movement of the second side wall 140 relative to the second support rail 532 of the pack housing 501 in the first direction (X-axis direction) may be limited.

More specifically, the first side wall 130 may include one or more first flanges 131 protruding in the first direction (the X-axis direction) or in a direction away from one side surface of the first cell block 110. When the first side wall 130 includes a plurality of first flanges 131, the plurality of first flanges 131 may be spaced apart from each other in the second direction (the Y-axis direction). The first flange 131 may be seated on the first support rail 531, and fastened and supported on the first support rail 531 through the first fastening member BT1. The first flange 131 may include a first hole 132 through which the first fastening member BT1 is passed, and the first hole 132 of the first flange 131 may overlap a first fastening hole 5311 of the first support rail 531 which the first fastening member BT1 is inserted into and fastened to in the third direction (the Z-axis direction). The first flange 131 may include two plates spaced apart from each other in the third direction (the Z-axis direction) to form a hollow portion, and in this case, the first hole 132 may penetrate the two plates of the first flange 131 in the third direction (the Z-axis direction). Alternatively, the first flange 131 may include one plate, and the first hole 132 may penetrate the plate of the first flange 131 in the third direction (the Z-axis direction).

The first fastening member BT1 may be passed through the first hole 132 of the first flange 131 to be inserted into and fastened to the first fastening hole 5311 of the first support rail 531. As the first fastening member BT1 is inserted into and fastened to the first fastening hole 5311 of the first support rail 531, the first flange 131 may be fastened and fixed to the first support rail 531. As the first flange 131 is fastened and fixed to the first support rail 531 by the first fastening member BT1, movement of the first flange 131 relative to the first support rail 531 in the first direction (the X-axis direction) may be limited.

The second side wall 140 may include one or more second flanges 141 protruding in the first direction (the X-axis direction) or in a direction away from another side surface of the first cell block 110. When the second side wall 140 includes a plurality of second flanges 141, the plurality of second flanges 141 may be spaced apart from each other in the second direction (the Y-axis direction). The second flange 141 may be seated on the second support rail 532, and fastened and supported on the second support rail 532 by the second fastening member BT2. The second flange 141 may include a second hole 142 through which the second fastening member BT2 is passed, and the second hole 142 of the second flange 141 may overlap a second fastening hole 5321 of the second support rail 532 which the second fastening member BT2 is inserted into and fastened to in the third direction (the Z-axis direction). The second flange 141 may include two plates spaced apart from each other in the third direction (the Z-axis direction) to form a hollow portion, and in this case, the second hole 142 may penetrate the two plates of the second flange 141 in the third direction (the Z-axis direction). Alternatively, the second flange 141 may include one plate, and the second hole 142 may penetrate the plate of the second flange 141 in the third direction (the Z-axis direction).

The second fastening member BT2 may be passed through the second hole 142 of the second flange 141, and inserted into and fastened to the second fastening hole 5321 of the second support rail 532. As the second fastening member BT2 is inserted into and fastened to the second fastening hole 5321 of the second support rail 532, the second flange 141 may be fastened and fixed to the second support rail 532. As the second flange 141 is fastened and fixed to the second support rail 532 by the second fastening member BT2, movement of the second flange 141 relative to the second support rail 532 in the first direction (the X-axis direction) may be limited.

In example embodiments, the first hole 132 of the first flange 131 may be a slot hole with a long axis and a short axis. The long axis of the first hole 132 of the first flange 131 may be parallel to the first direction (the X-axis direction), and the short axis thereof may be parallel to the second direction (the Y-axis direction) perpendicular to the first direction (the X-axis direction). When viewed in a plan view, a length LX1 of the first hole 132 in the first direction (the X-axis direction) may be greater than a length LY1 thereof in the second direction (the Y-axis direction). When viewed in the plan view, the first hole 132 may have an elliptical or rectangular shape.

When viewed in the plan view, the first fastening hole 5311 of the first support rail 531 may have a circular shape, and the length of the first fastening hole 5311 of the first support rail 531 in the first direction (the X-axis direction) may be less than the length LX1 of the first hole 132 of the first flange 131 in the first direction (the X-axis direction). In example embodiments, when the first flange 131 is fastened to the first support rail 531 by the first fastening member BT1, a center of the first hole 132 of the first flange 131 and a center of the first fastening hole 5311 of the first support rail 531 may be spaced apart from each other in the first direction (the X-axis direction).

In example embodiments, the second hole 142 of the second flange 141 may be a datum hole. When viewed in a plan view, a length LX2 of the second hole 142 in the first direction (the X-axis direction) may be substantially the same as or similar to a length LY2 thereof in the second direction (the Y-axis direction). When viewed in the plan view, the second hole 142 may have a circular or quadrangular shape. In example embodiments, the length LX2 of the second hole 142 of the second flange 141 in the first direction (the X-axis direction) may be less than the length LX1 of the first hole 132 of the first flange 131 in the first direction (the X-axis direction).

The upper cover plate 120 may cover the upper surface of the first cell block 110. The upper cover plate 120 may be coupled to an upper end of each of the first and second side walls 130 and 140 on the opposite sides of the first cell block 110. For example, one side of the upper cover plate 120 may be coupled to the upper end of the first side wall 130 by welding, and another side thereof may be coupled to the upper end of the second side wall 140 by welding.

The upper cover plate 120 may be attached to the upper surface of the first cell block 110 and thermally coupled to the first cell block 110. The upper cover plate 120 may be attached to the upper surface of the first cell block 110 through a thermally conductive adhesive layer between the upper cover plate 120 and the upper surface of the first cell block 110. For example, the thermally conductive adhesive layer may include a thermal interface material (TIM).

The upper cover plate 120 may include a cooling channel 121 configured to allow a cooling fluid to flow therethrough and be configured to cool the first cell block 110. The upper cover plate 120 may be referred to as a cooling plate. The upper cover plate 120 may be thermally coupled to the first cell block 110 through the thermally conductive adhesive layer to cool the first cell block 110. The cooling fluid provided from the outside of the first battery cell assembly 10 may flow into the cooling channel 121 through an inlet of the cooling channel 121, flow along the cooling channel 121, and thereafter be discharged to the outside through an outlet of the cooling channel 121. For example, the cooling channel 121 may provide a single path from the inlet to the outlet. While the cooling fluid flows along the cooling channel 121, the first battery cell assembly 10 may be cooled. For example, the upper cover plate 120 may be manufactured by bonding two plates together, and the cooling channel 121 may include a space defined between the two plates.

The lower cover plate 150 may extend along the lower surface of the first cell block 110 and cover the lower surface of the first cell block 110. The lower cover plate 150 may be coupled to a lower end of each of the first and second side walls 130 and 140 on the opposite sides of the first cell block 110. For example, one side of the lower cover plate 150 may be coupled to the lower end of the first side wall 130 by welding, and another side of the lower cover plate 150 may be coupled to the lower end of the second side wall 140 by welding. The lower cover plate 150 may include a venting passage for exhausting a high-temperature gas from the first cell block 110 into a space below the first cell block 110.

In example embodiments, when the battery pack 500 is mounted in a vehicle, a cabin room in which a passenger rides may be located above the pack lid 520, and the ground on which the vehicle travels may be located below the lower housing 510. A free volume FV may be provided between the bottom wall of the lower housing 510 and battery cell assemblies in the pack housing 501. For example, the free volume FV may be provided between the bottom wall of the lower housing 510 and the first battery cell assembly 10. A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, the battery cell assemblies may be prevented from being damaged due to the impact. The free volume FV may include an empty space between each of the battery cell assemblies and the lower housing 510. The free volume FV may be available as a space for freely allowing deformation of the lower housing 510 to some extent when the lower housing 510 deforms toward a battery cell assembly due to an impact applied to the lower part of the vehicle.

A height of the free volume FV and a distance between the bottom wall of the lower housing 510 and the battery cell assembly may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when a thickness or rigidity of the frames of the vehicle or the bottom wall of the lower housing 510 is relatively large, at least one of the size and height of the free volume FV may be relatively reduced. When the thickness or rigidity of the frames of the vehicle or the bottom wall of the lower housing 510 is relatively small, the bottom wall of the lower housing 510 is highly likely to deform and thus at least one of the size and height of the free volume FV may be relatively increased to protect the battery cell assembly. When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom wall of the lower housing 510 may have to be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a degree of damage to a battery cell included in the battery cell assembly. For example, when damage tolerance of the battery cell is 1 mm, the free volume FV may be determined to prevent the battery cell from deforming by more than 1 mm when the lower housing 510 deforms and presses a lower surface of the battery cell. In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, an upper surface of a battery cell assembly may be in close contact with the lower surface of the pack lid 520. When there is a space between the battery cell assembly and the pack lid 520, a high-temperature gas may propagate to several battery cell assemblies through the space between the battery cell assembly and the pack lid 520 during thermal runaway. Heat and flames may also be transferred to the pack lid 520 and thus may affect the cabin room above the pack lid 520. Therefore, a gas or flames generated in the battery pack 500 may be guided to the free volume FV by bringing upper surfaces of the battery cell assemblies and the lower surface of the pack lid 520 into close contact with each other.

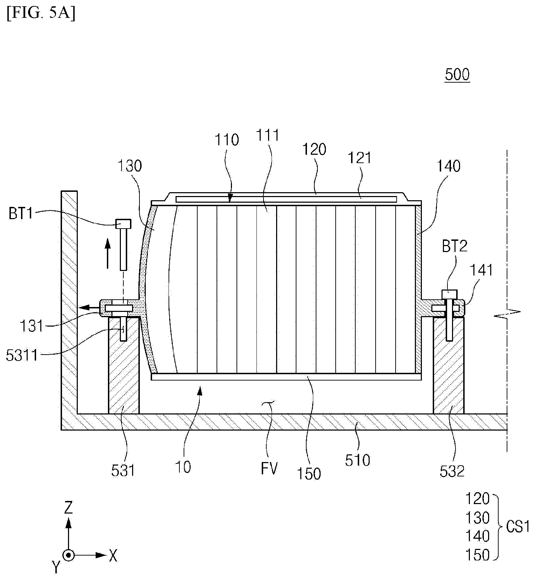

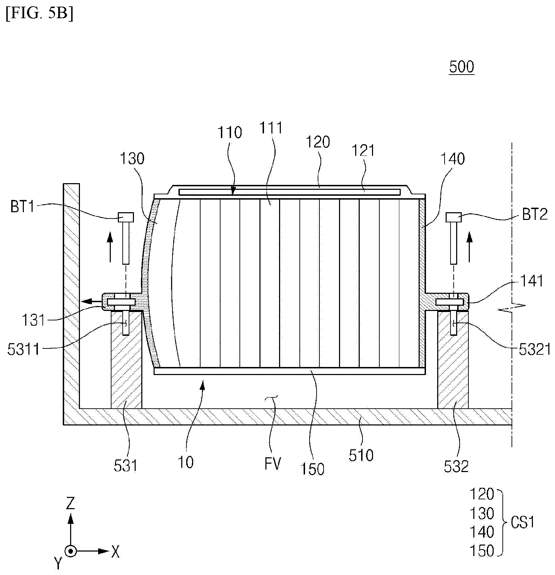

FIGS. 5A and 5B are cross-sectional views illustrating a rework operation performed on a battery pack 500 according to example embodiments of the present invention. The rework operation on the battery pack 500 described above with reference to FIGS. 1 to 4 will now be described with reference to FIGS. 5A and 5B.

Referring to FIGS. 1 and 5A, the first fastening member BT1 is separated from the first flange 131 and the first support rail 531. When the first fastening member BT1 is separated from the first flange 131 and the first support rail 531, the second flange 141 fastened to the second support rail 532by the second fastening member BT2 remains fixed and the first side wall 130 and the first flange 131 move in the first direction (the X-axis direction) due to swelling of the first cell block 110. The second flange 141 fastened to the second support rail 532 by the second fastening member BT2 remains fixed and thus a change in the thickness of the first cell block 110 due to the swelling of the first cell block 110 generally occurs in one direction.

Referring to FIGS. 1 and 5B, the second fastening member BT2 is separated from the second flange 141 and the second support rail 532 after the first fastening member BT1 is separated from the first flange 131 and the first support rail 531. As the first fastening member BT1 and the second fastening member BT2 are separated from the first case CS1, the first battery cell assembly 10 may be in a state detachable from the pack housing 501. Thereafter, a new battery cell assembly may be mounted on the pack housing 501 or the first battery cell assembly 10 from which defects have been removed through repair may be mounted on the pack housing 501.

In the case of a general battery pack, when a battery cell assembly is separated from a pack housing, a relatively large force is applied to parts of a case and the pack housing of the battery cell assembly, which are fastened to each other, due to the swelling of a cell block in the battery cell assembly, thus making it difficult to cancel the fastening of the case and the pack housing.

However, according to example embodiments of the present invention, the first hole 132 for fastening one side of the first battery cell assembly 10 to the pack housing 501 may be a slot hole, and the second hole 142 for fastening another side of the first battery cell assembly 10 to the pack housing 501 may be a datum hole. Because the slot hole has a long axis extending in a swelling direction of the first cell block 110, a fastening release operation may be easily performed to separate the first fastening member BT1 from the first flange 131 and the first support rail 531 during the rework operation on the first battery cell assembly 10. When the rework operation is performed on the first battery cell assembly 10, the fastening of the first flange 131, which is provided on one side of the first battery cell assembly 10 and has the slot hole, and the pack housing 501 may be released, and thereafter, the fastening of the second flange 141, which is provided on the other side of the first battery cell assembly 10 and has the datum hole, and the pack housing 501 may be released. When the fastening of the first flange 131 having the slot hole and the pack housing 501 is released, a change in the thickness of the first cell block 110 in the first direction (the X-axis direction) due to the swelling of the first cell block 110 and the movement of the first flange 131 are allowed, and a force to be applied to the parts of the second flange 141 having the datum hole and the pack housing 501, which are fastened to each other, decreases, thus making it easy to perform the fastening release operation to separate the second fastening member BT2 from the second flange 141 and the second support rail 532. Accordingly, it is easier to separate the first battery cell assembly 10 from the pack housing 501 and thus the productivity of the rework work on the battery pack 500 may improve.

### (Second Embodiment)

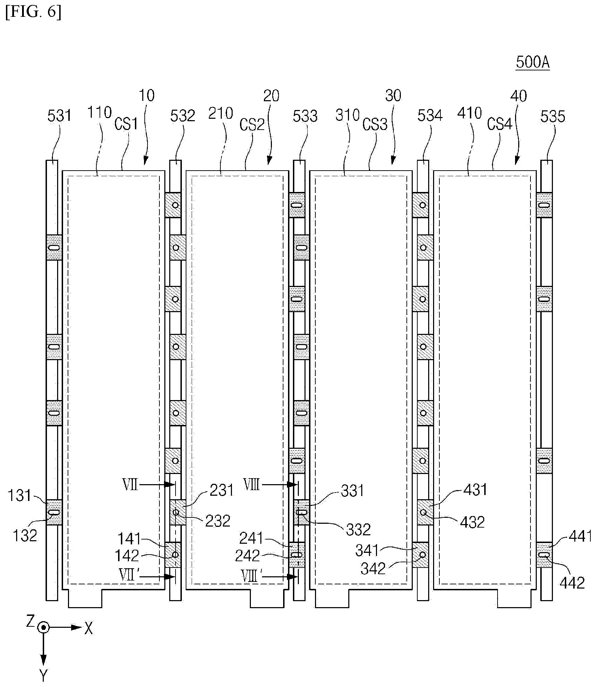

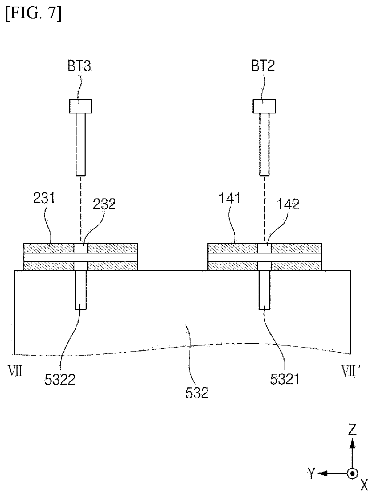

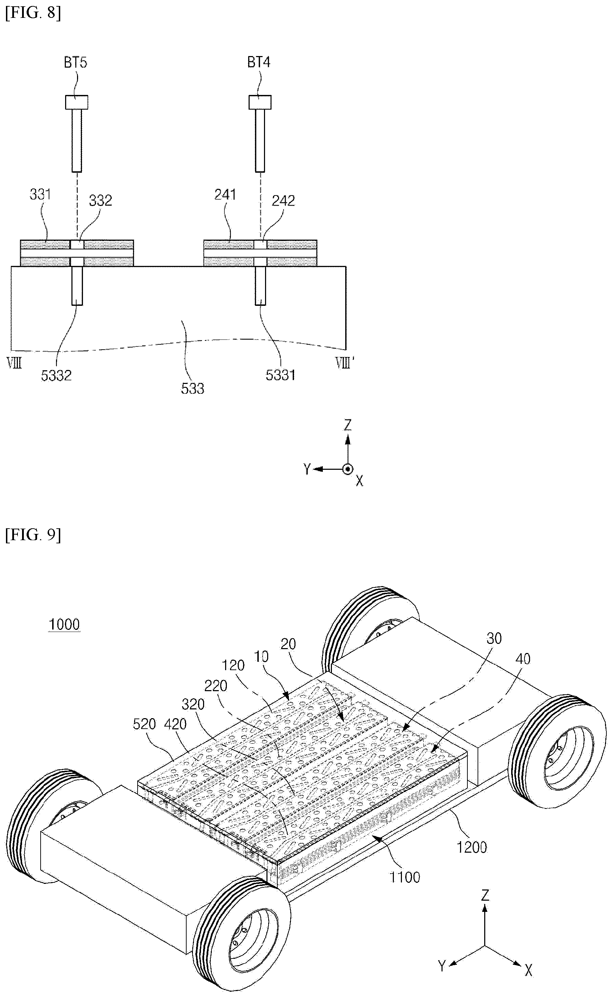

FIG. 6 is a plan view of a battery pack 500A according to example embodiments of the present invention. FIG. 7 is a cross-sectional view taken along line VII-VII' of FIG. 6. FIG. 8 is a cross-sectional view taken along line VIII-VIII' of FIG. 6.

Referring to FIGS. 6 to 8, the battery pack 500A may include a first battery cell assembly 10 and a second battery cell assembly 20 sequentially arranged in the first direction (the X-axis direction).

The second battery cell assembly 20 may include a second cell block 210 including a plurality of battery cells, and a second case CS2 for accommodation of the second cell block 210. The second cell block 210 may be substantially the same as or similar to the first cell block 110. The second battery cell assembly 20 may be mounted in a pack housing 501 in the side mounting manner. The second battery cell assembly 20 may be supported by a second support rail 532 and a third support rail 533 of the pack housing 501 that are spaced apart from each other with the second cell block 210 interposed therebetween. In this case, the second support rail 532 is configured to support both the first battery cell assembly 10 and the second battery cell assembly 20. The second battery cell assembly 20 may be substantially the same as or similar to the first battery cell assembly 10 except for the position of a slot hole of a flange provided for the fastening of the second case CS2 and the pack housing 501 and the position of a datum hole of the flange provided for the fastening of the second case CS2 and the pack housing 501.

The second case CS2 may include an upper cover plate 220 (see FIG. 10) facing an upper surface of the second cell block 210 and having a cooling channel, a third side wall facing one side surface of the second cell block 210, a fourth side wall facing another side surface of the second cell block 210, and a lower cover plate facing a lower surface of the second cell block 210. The third side wall and the fourth side wall may be spaced apart from each other in the first direction (the X-axis direction) with the second cell block 210 interposed therebetween. The third side wall may face the second side wall 140 (see FIG. 2) of the first battery cell assembly 10. The second case CS2 is different from the first case CS1 in that the third side wall of the second case CS2 facing the second side wall 140 of the first battery cell assembly 10 may have a datum hole and the fourth side wall of the second case CS2 may have a slot hole.

More specifically, the third side wall of the second case CS2 may be fastened to the second support rail 532 by a third fastening member BT3 such as a bolt, and the fourth side wall of the second case CS2 may be fastened to the third support rail 533 by a fourth fastening member BT4 such as a bolt. The third support rail 533 may be spaced apart from the second support rail 532 in the first direction (the X-axis direction), and extend in the second direction (the Y-axis direction).

The third side wall of the second case CS2 may include one or more third flanges 231 protruding in the first direction (the X-axis direction) or in a direction away from one side surface of the second cell block 210. The third flange 231 may be seated on the second support rail 532, and fastened and supported on the second support rail 532 by the third fastening member BT3. The third flange 231 may include a third hole 232 through which the third fastening member BT3 is passed, and the third hole 232 of the third flange 231 may overlap a third fastening hole 5322 of the third support rail 533, which the third fastening member BT3 is inserted into and fastened to, in the third direction (the Z-axis direction). The third fastening member BT3 may be passed through the third hole 232 of the third flange 231, and inserted into and fastened to the third fastening hole 5322 of the second support rail 532. As the third fastening member BT3 is inserted into and fastened to the third fastening hole 5322 of the second support rail 532, the third flange 231 may be fastened and fixed to the second support rail 532. As the third flange 231 is fastened and fixed to the second support rail 532 by the third fastening member BT3, movement of the third flange 231 relative to the second support rail 532 in the first direction (the X-axis direction) may be limited.

The third hole 232 of the third flange 231 may be a slot hole for allowing the movement of the third flange 231 caused by the swelling of the second cell block 210 during the rework operation on the second battery cell assembly 20. A long axis of the third hole 232 of the third flange 231 may be parallel to the first direction (the X-axis direction), and a short axis thereof may be parallel to the second direction (the Y-axis direction). When viewed in a plan view, a length of the third hole 232 in the first direction (the X-axis direction) may be greater than a length of the third hole 232 in the second direction (the Y-axis direction). When viewed in the plan view, the third hole 232 may have an elliptical or rectangular shape. In example embodiments, when the third flange 231 is fastened to the second support rail 532 by the third fastening member BT3, a center of the third hole 232 of the third flange 231 and a center of the third fastening hole 5322 of the second support rail 532 may be spaced apart from each other in the first direction (the X-axis direction).

The second support rail 532 may support both the second flange 141 of the first battery cell assembly 10 and the third flange 231 of the second battery cell assembly 20. On the second support rail 532, the second flange 141 and the third flange 231 may be spaced apart from each other in a direction in which the second support rail 532 extends or the second direction (the Y-axis direction) . On the second support rail 532, the second fastening hole 5321 and the third fastening hole 5322 may be spaced apart from each other in the direction in which the second support rail 532 extends or the second direction (the Y-axis direction).

The fourth side wall of the second case CS2 may include at least one fourth flange 241 protruding in the first direction (the X-axis direction) or in a direction away from the other side surface of the second cell block 210. The fourth flange 241 is seated on the third support rail 533, and fastened to and supported by the third support rail 533 by the fourth fastening member BT4. The fourth flange 241 may include a fourth hole 242 through which the fourth fastening member BT4 is passed, and the fourth hole 242 of the fourth flange 241 may overlap a fourth fastening hole 5331 of the third support rail 533, which the fourth fastening member BT4 is inserted into and fastened to, in the third direction (the Z-axis direction). The fourth fastening member BT4 may be passed through the fourth hole 242 of the fourth flange 241, and inserted into and fastened to the fourth fastening hole 5331 of the third support rail 533. As the fourth fastening member BT4 is inserted into and fastened to the fourth fastening hole 5331 of the third support rail 533, the fourth flange 241 may be fastened and fixed to the third support rail 533. As the fourth flange 241 is fastened and fixed to the third support rail 533 by the fourth fastening member BT4, movement of the fourth flange 241 relative to the third support rail 533 in the first direction (the X-axis direction) may be limited.

The fourth hole 242 of the fourth flange 241 may be a datum hole. When viewed in a plan view, a length of the fourth hole 242 in the first direction (the X-axis direction) may be substantially the same as or similar to a length thereof in the second direction (the Y-axis direction). When viewed in the plan view, the fourth hole 242 may have a circular or quadrangular shape.

In embodiments, the second support rail 532 is configured to support both the first battery cell assembly 10 and the second battery cell assembly 20, and the second flange 141 of the first battery cell assembly 10 and the third flange 231 of the second battery cell assembly 20 on the second support rail 532 may be the same type of flanges. For example, as shown in the drawings, both the second flange 141 of the first battery cell assembly 10 and the third flange 231 of the second battery cell assembly 20 may be flanges with a datum hole.

When the second flange 141 of the first battery cell assembly 10 is a flange with the datum hole and the third flange 231 of the second battery cell assembly 20 is a flange with a slot hole, the second battery cell assembly 20 that deforms due to swelling is likely to physically interfere with the first battery cell assembly 10 when fastening to the third flange 231 of the second battery cell assembly 20 is released to perform the rework work. However, according to embodiments, the second support rail 532 is configured to support only the same type of flanges and thus physical interference between adjacent battery cell assemblies can be prevented or suppressed when fastening to one battery cell assembly is released to perform the rework work.

The battery pack 500A may further include a third battery cell assembly 30 and a fourth battery cell assembly 40 that are arranged in the first direction (the X-axis direction).

The third battery cell assembly 30 may be substantially the same as the first battery cell assembly 10. Briefly, the third battery cell assembly 30 may include a third cell block 310 between the third support rail 533 and a fourth support rail 534, and a third case CS3 fastened to the pack housing 501 and accommodating the third cell block 310. The third case CS3 may include a fifth side wall facing the second battery cell assembly 20, a sixth side wall opposite the fifth side wall, an upper cover plate 320 (see FIG. 10) with a cooling channel, and a lower cover plate. The fifth sidewall of the third case CS3 may include a fifth flange 331 fastened to the third support rail 533 through a fifth fastening member BT5 such as a bolt, and the sixth side wall of the third case CS3 may include a sixth flange 341 fastened to the fourth support rail 534 through a sixth fastening member (not shown) such as a bolt. As the fifth fastening member BT5 is passed through a fifth hole 332 of the fifth flange 331 and is inserted into and fastened to a fifth fastening hole 5332 of the third support rail 533, movement of the fifth flange 331 relative to the third support rail 533 in the first direction (the X-axis direction) may be limited. As the sixth fastening member is passed through a sixth hole 342 of the sixth flange 341 and is inserted into and fastened to a sixth fastening hole of the fourth support rail 534, movement of the sixth flange 341 relative to the fourth support rail 534 in the first direction (the X-axis direction) may be limited. **In** this case, the fifth hole 332 of the fifth flange 331 may be a slot hole allowing the movement of the fifth flange 331 caused by the swelling of the third cell block 310 during the rework operation on the third battery cell assembly 30, and the sixth hole 342 of the sixth flange 341 may be a datum hole.

The fourth battery cell assembly 40 may be substantially the same as the second battery cell assembly 20. Briefly, the fourth battery cell assembly 40 may include a fourth cell block 410 between the fourth support rail 534 and the fifth support rail 535, and a fourth case CS4 fastened to the pack housing 501 and accommodating the fourth cell block 410. The fourth case CS4 may include a seventh side wall facing the third battery cell assembly 30, an eighth side wall opposite the seventh side wall, an upper cover plate 420 (see FIG. 10) with a cooling channel, and a lower cover plate. The seventh side wall of the fourth case CS4 may include a seventh flange 431 fastened to the fourth support rail 534 through a seventh fastening member (not shown) such as a bolt, and the eighth side wall of the fourth case CS4 may include an eighth flange 441 fastened to the fifth support rail 535 through an eighth fastening member (not shown) such as a bolt. As the seventh fastening member is passed through a seventh hole 432 of the seventh flange 431 and is inserted into and fastened to a seventh fastening hole of the fourth support rail 534, movement of the seventh flange 431 relative to the fourth support rail 534 in the first direction (the X-axis direction) may be limited. As the eighth fastening member is passed through an eighth hole 442 of the eighth flange 441 and is inserted into and fastened to an eighth fastening hole of the fifth support rail 535, movement of the eighth flange 441 relative to the fifth support rail 535 in the first direction (the X-axis direction) may be limited. In this case, the seventh hole 432 of the seventh flange 431 may be a datum hole, and the eighth hole 442 of the eighth flange 441 may be a slot hole allowing the movement of the eighth flange 441 caused by the swelling of the fourth cell block 410 during the rework operation on the fourth battery cell assembly 40.

In embodiments, the battery pack 500A may include a plurality of battery cell assemblies arranged in the first direction (the X-axis direction), and the pack housing 501 may include a plurality of support rails arranged in the first direction (the X-axis direction). Each of the battery cell assemblies may be supported by two support rails adjacent to each other in the first direction (the X-axis direction) among the plurality of support rails. In this case, flanges of cases of battery cell assemblies fastened to odd-numbered support rails (e.g., the first support rail 531, the third support rail 533, and the fifth support rail 535) among the plurality of support rails may include slot holes allowing the movement of the flanges due to the swelling of the cell blocks of these battery cell assemblies during the rework operation. Flanges of cases of battery cell assemblies fastened to even-numbered support rails (e.g., the second support rail 532 and the fourth support rail 534) among the plurality of support rails may include datum holes.

In embodiments, two adjacent battery cell assemblies are supported by the same support rail, and flanges of two adjacent battery cell assemblies on the support rail may all be of the same type. For example, the support rail may be configured to support only flanges with slot holes or only flanges with datum holes. For example, only flanges with slot holes may be provided in odd-numbered support rails (e.g., the first support rail 531, the third support rail 533, and the fifth support rail 535) among the plurality of support rails, and only flanges with datum holes may be provided in even-numbered support rails (e.g., the second support rail 532 and the fourth support rail 534) among the plurality of support rails.

When a flange with a slot hole of one battery cell assembly and a flange with a datum hole of another battery cell assembly are supported on the same support rail, physical interference may occur between the battery cell assembly and the other battery cell assembly adjacent thereto when the flange with the slot hole of the battery cell assembly is released to perform the rework work. However, according to embodiments, a single support rail configured to support all adjacent battery cell assemblies is configured to support only the same type of flanges, thus preventing or suppressing physical interference between battery cell assemblies when fastening to one battery cell assembly is released to perform the rework work.

### (Third Embodiment)

FIG. 9 is a schematic view of an electric vehicle 1000 in which a battery pack 1100 according to example embodiments of the present invention is mounted.

For the sake of simplicity, FIG. 9 illustrates only a vehicle body frame 1200 forming a lower frame of the vehicle, and the battery pack 1100 and tires that are coupled to the vehicle body frame 1200. For example, the battery pack 1100 may include the battery pack 500A described above with reference to FIGS. 6 to 8.

In the case of a general battery pack, battery cell assemblies are installed at the bottom of a pack housing of the battery pack. In embodiments, a free volume FV (see FIG. 2) may be provided below the battery cell assemblies (i.e., first to fourth battery cell assemblies 10, 20, 30, and 40) of the battery pack 1100. That is, due to no space between the battery cell assemblies and a pack lid 520, a gas generated in the battery cell assemblies may be prevented from being transferred to a cabin room corresponding to an upper part of the vehicle. Furthermore, the gas generated in the battery cell assemblies is guided to the free volume FV provided in the battery cell assemblies and a pack housing of the battery pack 1100. The gas may flow through the free volume FV and thereafter be discharged to a lower side of the vehicle through a gas exhaust installed in the battery pack 1100. According to the present embodiments, in the battery pack 1100, the free volume FV is provided between the battery cell assemblies and the pack housing and thus the battery cell assemblies can be prevented from being damaged regardless of the deformation of the pack housing.

According to embodiments of the present invention, the battery pack 1100 and the electric vehicle 1000 including the battery pack 1100 are capable of increasing the safety of passengers. In addition, the battery cell assemblies that are key components can be protected, and the durabilities of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a first battery cell assembly including a first cell block with a plurality of first battery cells and a first case accommodating the first cell block, wherein the first case includes a first side wall and a second side wall spaced apart from each other in a first direction with the first cell block interposed therebetween; and
a pack housing configured to mount the first battery cell assembly therein,
wherein the first side wall includes a first flange fastened to the pack housing by a first fastening member to limit movement of the first flange relative to the pack housing in the first direction,
the second side wall includes a second flange fastened to the pack housing by a second fastening member to limit movement of the second flange relative to the pack housing in the first direction, and
the first flange includes a first hole through which the first fastening member is passed, and a length of the first hole in the first direction is greater than a length of the first hole in a second direction perpendicular to the first direction.

2. The battery pack of claim 1, wherein
the second flange includes a second hole through which the second fastening member is passed, and a length of the second hole in the first direction is equal to a length of the second hole in the second direction.

3. The battery pack of claim 2, wherein
the length of the first hole in the first direction is greater than the length of the second hole in the first direction.

4. The battery pack of claim 1, wherein
the pack housing comprises:
a first support rail configured to support the first flange, and including a first fastening hole to which the first fastening member is fastened; and
a second support rail configured to support the second flange, and including a second fastening hole to which the second fastening member is fastened.

5. The battery pack of claim 4, wherein
a center of the first fastening hole is spaced apart from a center of the first hole in the first direction.

6. The battery pack of claim 1, further comprising
a second battery cell assembly including a second cell block with a plurality of second battery cells and a second case accommodating the second cell block, wherein the second case includes a third side wall and a fourth side wall spaced apart from each other in the first direction with the second cell block interposed therebetween,
wherein the third side wall includes a third flange fastened to the pack housing by a third fastening member to limit movement of the third flange relative to the pack housing in the first direction,
the fourth side wall includes a fourth flange fastened to the pack housing by a fourth fastening member to limit movement of the fourth flange relative to the pack housing in the first direction,
the third side wall faces the second side wall,
the third flange includes a third hole through which the third fastening member is passed,
the fourth flange includes a fourth hole through which the fourth fastening member is passed, and
a length of the fourth hole in the first direction is greater than a length of the fourth hole in the second direction.

7. The battery pack of claim 6, wherein
a length of the third hole in the first direction is equal to a length of the third hole in the second direction.

8. The battery pack of claim 6, wherein
the pack housing comprises:
a first support rail configured to support the first flange;
a second support rail configured to support the second flange and the third flange; and
a third support rail configured to support the fourth flange,
wherein the first support rail, the second support rail, and the third support rail are spaced apart from one another in the first direction.

9. The battery pack of claim 8, wherein
the second flange and the third flange are spaced apart from each other in the second direction.

10. The battery pack of claim 8, wherein
the first support rail includes a first fastening hole to which the first fastening member is fastened,
the second support rail includes a second fastening hole to which the second fastening member is fastened and a third fastening hole to which the third fastening member is fastened,
the third support rail includes a fourth fastening hole to which the fourth fastening member is fastened, and
the second fastening hole and the third fastening hole are spaced apart from each other in the second direction.

11. The battery pack of claim 1, wherein
the plurality of first battery cells are stacked in the first direction.
